# EUROPEAN PATENT SPECIFICATION

(11) **EP 0 359 429 B1**
(45) Date of publication and mention of the grant of the patent: **21.12.1994**
(21) Application number: 89308685.0
(22) Date of filing: 25.08.1989
(51) Int. Cl.: B60N 2/44

(54) **Seat backrest trim panel**
Sitzrückenlehnenbekleidung
Revêtement de dossier de siège

(30) Priority: 13.09.1988 GB 8821856
(43) Date of publication of application: 21.03.1990
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR); FORD MOTOR COMPANY, Dearborn, MI 48120 (US)
(72) Inventor: Bowler, David Alan, Brentwood Essex CM13 3QB (GB)
(74) Representative: Messulam, Alec Moses

(56) References cited:
- EP-A- 0 226 159
- FR-A- 2 273 756
- FR-A- 2 409 879
- FR-A- 2 580 562
- PATENT ABSTRACTS OF JAPAN, vol. 7, no. 89 (M-207)[1234], 13th April 1983; & JP-A-58 12 849

## Description

This invention relates to a seat backrest trim panel for use with vehicle seats.

At the present time, most vehicle seats are constructed with "cut and sewn" covers which are fitted over upholstery attached to the seat structure. In the case of the seat back, this results in the material being stretched across the frame and intruding unnecessarily into the knee space for the rear seat passenger.

The use of moulded seat cushions, where the fabric seat covering is moulded to a foam cushion, is becoming more widespread and this necessitates a different construction for the seat back.

FR-A-2 580 562, corresponding to the preamble of claim 1, describes a seat back construction which uses a moulded seat back panel. The panel may be moulded of cardboard, wood fibre or plastics material.

According to the invention, there is provided a backrest trim panel for a motor vehicle seat, adapted to extend across the rear side of the backrest and having a dished area, the trim panel comprising a relatively rigid foundation panel having a peripheral shape corresponding to that of the backrest, and a relatively flexible covering layer covering the outside of the foundation panel and forming the outer surface of the panel, characterized in that the foundation panel has a void area within its periphery and is formed with a step adjacent the edge of the void area, the covering layer following the contour of the step so that the panel is dished where the covering layer spans the void area, and in that there is a layer of resilient foam between the foundation panel and the flexible covering.

A pocket can be formed at the back of the trim panel by attaching a pocket flap (which may be flexible or rigid) across the lower part of the trim panel. The dished form of the trim panel can be of advantage in increasing the volume of such a pocket.

Preferably the panel has internal, integrally moulded clips by which it can be clipped onto an internal frame part of the seat, and means adjacent its top edge which can engage with headrest mounts to secure the trim panel to the seat.

The invention will now be further described, by way of example, with reference to the accompanying drawings, in which:
Figure 1 is a perspective exploded view of part of a seat incorporating a trim panel according to the invention;
Figure 2 is a sectional view on the line II-II from Figure 1;
Figure 3 is a sectional view on the line III-III from Figure 1;
Figure 4 is a sectional view on the line IV-IV from Figure 1; and
Figures 5 and 6 are enlarged views of details from Figures 3 and 4 respectively.

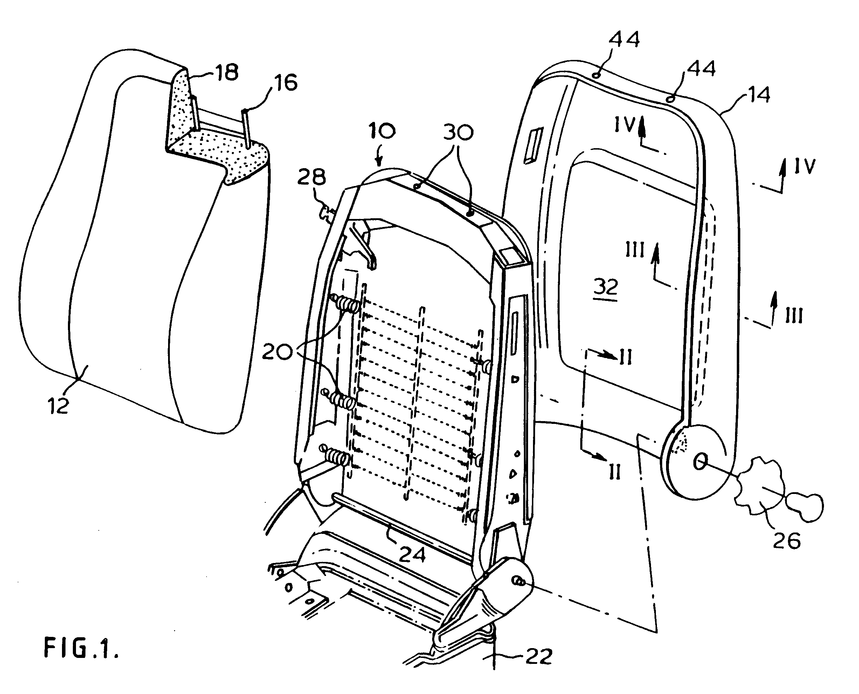

Figure 1 shows a seat back made up of a frame 10, a cushion 12 and a trim panel 14. The cushion incorporates a platform 16 which is moulded into the foam of the cushion, and has a fabric covering 18 onto which the foam is moulded in a known manner. The cushion is held in the frame 10 by springs 20 which are connected between the platform 16 and the frame so that, in the assembled seat, the platform is positioned as shown in dotted lines in Figure 1
The frame 10 is connected to a seat base 22 in a manner which allows the frame to be pivoted about the axis of a rod 24, and an adjustment knob 26 is fitted on the end of the rod to allow adjustment to be carried out. The frame also carries a seat tip release lever 28 and apertures 30 for receiving the support rods of a headrest.

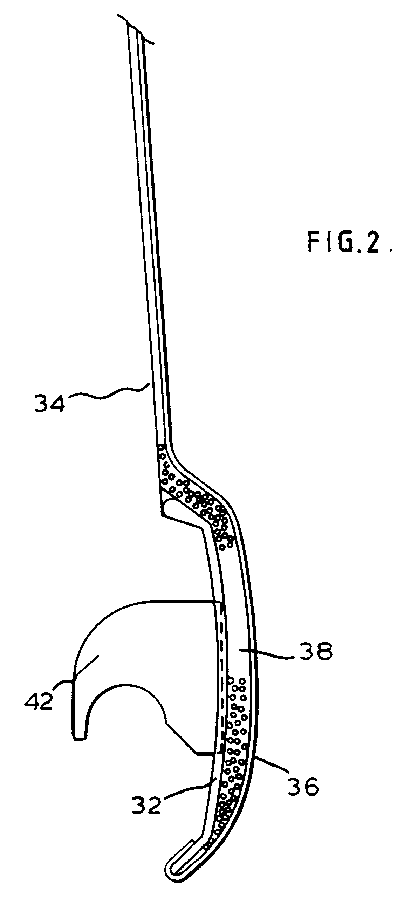

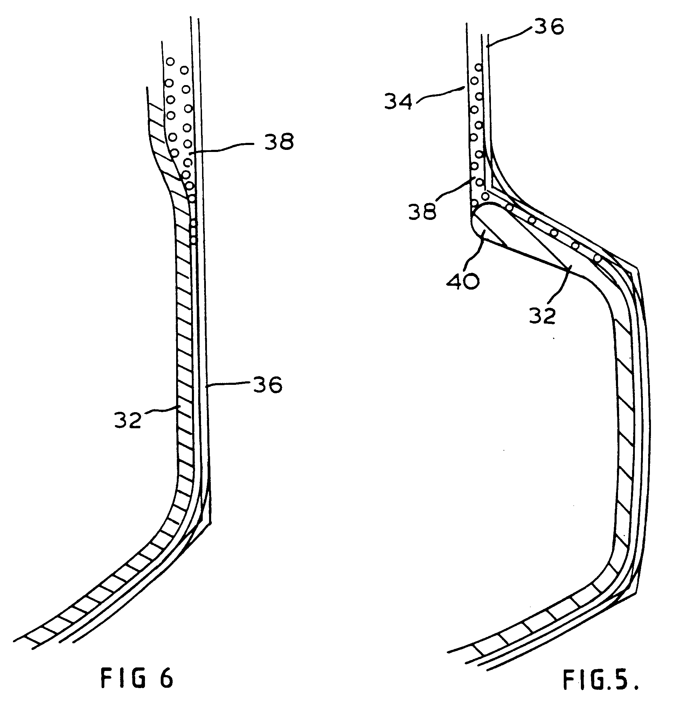

The trim panel 14 is a moulded product which covers the back of the seat. The construction of the trim panel can be seen in more detail in the sectional views of Figures 2 to 6. The panel has a rigid foundation panel 32 of glass reinforced polyurethane foam with a thickness of about 2 mm, except in the edge areas where it is of greater thickness. The foundation panel also has an aperture 34 in the centre, so that the panel is similar to a frame.

The foundation panel 32 is then combined with two further layers, in moulding processes. An outer layer 36 of flexible PVC sheet covers the whole of the foundation panel 32, including the aperture 34 and is connected to the foundation panel by a thin layer of resilient foam 38. The presence of the foam between the flexible covering layer 36 and the relatively rigid foundation panel 32 provides a soft feel to the back of the seat, and the use of an aperture in the centre allows the knees of the backseat passenger to hit against the back of the front seat without injury.

As can be seen from Figures 2, 3 and 5, the part of the foundation panel 32 which surrounds the aperture 34 is directed inwards, which results in the centre part of the trim panel being dished to give greater space for the knees of the backseat passenger. The flexible covering layer 36 will of course extend across the aperture between the inner end of the flanges 40 surrounding the aperture.

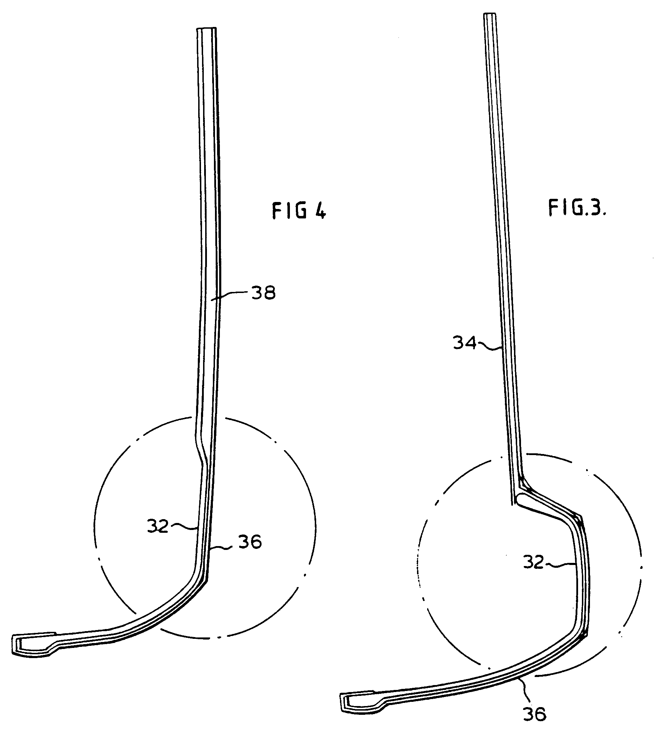

Figure 4 shows that the gap between the foundation panel 32 and the covering layer 36 (which is filled with foam 38) is not constant. In the central area, the gap is substantially greater than at the edges.

An open-topped map pocket (not shown) can be attached to the back of the seat in a manner which is in itself known. If the three side walls of the pocket are attached to the rigid panel adjacent to the aperture 34, then the dished shape formed by the aperture can give additional space in the map pocket.

The trim panel is attached to the seat by hooking the panel onto the seat pivot bar 24 using integrally moulded hooks 42 (see Figure 2) which are moulded as part of the foundation panel 32; then pivoting the trim panel upright so that holes 44 in the top face of the trim panel register with the holes 30 in the frame, and then locking the trim panel in place by inserting headrest support bushes through the holes 44 and 30. The trim panel is then permanently held in place. Subsequent to fitting the trim panel in this way, the seat incline knob 26 is fitted on its shaft, and a seat tip knob 28 is fitted.

The flexible covering layer 36 may be PVC or alternatively can be a woven or knitted fabric with a foam impermeable lining. The foam 38 between the foundation panel and the covering layer will vary in thickness over the panel (this can be seen particularly in Figure 2) with, for example, a maximum thickness of 5mm. The foam can be a cold cure polyether foam.

The trim panel made in this way provides a clean, tidy finish to the back of the seat and is easy to assemble to the rest of the seat. It also provides additional space for the knees of the back seat passenger and the possibility of providing a usefully sized back seat map pocket.

## Claims

1. A backrest trim panel (14) for a motor vehicle seat, adapted to extend across the rear side of the backrest (10) and having a dished area, the trim panel (14) comprising a relatively rigid foundation panel (32) having a peripheral shape corresponding to that of the backrest (10), and a relatively flexible covering layer (36) covering the outside of the foundation panel (32) and forming the outer surface of the panel (14), characterized in that the foundation panel has a void area (34) within its periphery and is formed with a step adjacent the edge of the void area (34), the covering layer following the contour of the step so that the panel is dished where the covering layer spans the void area (34), and in that there is a layer of resilient foam (38) between the foundation panel (32) and the flexible covering (36).

2. A backrest trim panel as claimed in Claim 1, wherein a pocket is formed at the back of the trim panel (14) by attaching a pocket flap across the lower part of the trim panel (14).

3. A backrest trim panel as claimed in Claim 1 or Claim 2, wherein the panel (14) has internal, integrally moulded clips by which it can be clipped onto an internal frame part of the seat, and means adjacent its top edge which can engage with headrest mounts to secure the trim panel to the seat.

## Patentansprüche

1. Lehnenverkleidungstafel (14) für einen Kraftfahrzeugsitz, angepaßt zur Erstreckung über die Rückseite der Lehne (10) und mit einem einwärts gekrümmten Bereich, wobei die Verkleidungstafel (14) eine verhältnismäßig starre Grundtafel (32) mit einer Umfangsgestalt, die der der Lehne (10) entspricht, und eine verhältnismäßig flexible Bezugsschicht (36) beinhaltet, die die Außenseite der Grundtafel (32) bedeckt und die Außenfläche der Tafel (14) bildet, dadurch gekennzeichnet, daß die Grundtafel in ihrer Außenfläche einen hohlen Bereich (34) hat und mit einer Stufe ausgeformt ist, die angrenzend an die Kante des hohlen Bereichs (34) liegt, daß die Bezugsschicht der Kontur der Stufe folgt, so daß die Verkleidungstafel einwärts gekrümmt ist, wo die Bezugsschicht den hohlen Bereich (34) überspannt, und dadurch, daß es eine Schicht elastischen Schaumstoffes (38) zwischen der Grundtafel (32) und dem flexiblen Bezug (36) gibt.

2. Lehnenverkleidungstafel nach Anspruch 1, bei welcher eine Tasche auf der Rückseite der Verkleidungstafel (14) ausgeformt wird, indem eine Taschenklappe über dem unteren Teil der Verkleidungstafel (14) befestigt wird.

3. Lehnenverkleidungstafel nach Anspruch 1 oder 2, bei welcher die Tafel (14) innere, integral geformte Befestigungsvorrichtungen hat, mit denen sie an den inneren Rahmenteil des Sitzes geklammert werden kann, und Mittel hat, angrenzend an ihre Oberkante, die mit Kopfstützenbefestigungen einrasten können, um die Verkleidungstafel am Sitz zu sichern.

## Revendications

1. Panneau de parement (14) de dossier pour un siège de véhicule à moteur destiné à s'étendre par dessus le côté arrière du dossier (10) et présentant une zone incurvée, le panneau de parement (14) comprenant un panneau de fondation (32) relativement rigide ayant une forme périphérique correspondant à celle du dossier (10) et une couche de revêtement (36) relativement flexible recouvrant l'extérieur du panneau de fondation (32) et formant la surface externe du panneau (14), caractérisé en ce que le panneau de fondation présente une zone évidée (34) à l'intérieur de sa périphérie et est formé avec une marche disposée à côté de l'arête de la zone évidée (34), la couche de revêtement suivant le contour de la marche de manière à ce que le panneau de parement soit incurvé à l'endroit où la couche de revêtement recouvre la zone évidée (34), et en ce qu'il existe une couche de mousse résiliente (38) entre le panneau de fondation (32) et le revêtement flexible (36).

2. Panneau de parement de dossier selon la revendication 1, dans lequel une poche est formée à l'arrière du panneau de parement (14) en fixant un rabat de poche par dessus la partie inférieure du panneau de parement (14).

3. Panneau de parement de dossier selon la revendication 1 ou 2, dans lequel le panneau (14) présente des dispositifs de retenue internes et moulés de manière intégrale au moyen desquels ledit panneau peut être fixé sur une partie de cadre interne du siège, et des moyens situés à côté de son arête supérieure qui peuvent s'engager avec les supports de l'appui-tête de manière à fixer le panneau de parement au siège.
